# DEMANDE DE BREVET EUROPEEN

(11) **EP 0 783 099 A1**
(43) Date de publication de la demande: **09.07.1997**
(21) Numéro de dépôt: 96420004.2
(22) Date de dépôt: 04.01.1996
(51) Int. Cl.: G01M 3/00, F17D 5/02

(54) **Procédé de localisation de fuites sur des conduites enfouies, par voie thermograhiques ou analogues**

(71) Demandeur: Hurbe, Emile, 63000 Clermont Ferrand (FR); SASTEC S.A., 63000 Clermont-Ferrand (FR)
(72) Inventeur: Hurbe, Emile, F-63000 Clermont-Ferrand (FR)
(74) Mandataire: Chanet, Jacques

(57) **Abrégé**

L'invention a pour objet un procédé de localisation de fuites sur une partie d'une conduite enfouie dans le sol.

Ce procédé est caractérisé en ce qu'il consiste à obturer la partie de conduite enfouie à toutes ses extrémités, sauf une, après l'avoir vidangée de son fluide, à injecter sous pression dans la conduite depuis la dite extrémité restée libre un fluide frigorigène, tel que Fréon ou Ammoniaque, à procéder à un contrôle de la température superficielle au sol, à entretenir le refroidissement en maintenant la pression jusqu'à production d'un refroidissement à la surface du sol et à effectuer périodiquement un contrôle de la température superficielle du sol, le dit contrôle étant un examen thermographique réaliser au moyen d'une caméra infrarouge.

## Description

La présente invention est du domaine des mesures physiques, particulièrement de la thermographie appliquée à la recherche des fuites des tuyauteries noyées dans les sols, dans les dalles ou dans les murs.

On rappelle que la technique de la thermographie utilisant une caméra thermosensible, dite "caméra infrarouge", a été largement appliquée à la recherche des défauts électriques de câbles chauffants noyés dans les dalles, en prenant des dispositions pour créer, au niveau de ces défauts, des échauffements à la surface des sols détectables à l'aide d'une caméra infrarouge.

Le but de la présente invention est de proposer un procédé permettant de localiser de façon précise au moyen d'une caméra infrarouge, des fuites, dues par exemple à la corrosion, sur des tuyaux ou conduites d'adduction de fluides, eau froide, eau chaude ou de chauffage notamment, lorsque les dites conduites ne sont pas directement examinables, par exemple parce qu'elles sont noyées dans le sol, ou dans une dalle ou dans un mur.

Selon la présente invention, un procédé de localisation des fuites sur une partie enfouie d'une conduite consiste à :
obturer la dite partie enfouie à toutes ses extrémités, sauf une, après l'avoir vidangée de son fluide, puis
injecter dans la conduite depuis l'extrémité restée libre de la partie enfouie, un fluide frigorigène sous pression, puis à
procéder après un certain temps de maintien de la pression du fluide frigorigène, à un contrôle de la température superficielle du sol, du mur ou de la paroi dans laquelle est enfouie la dite partie de conduite, et à
entretenir ce refroidissement en maintenant la pression du liquide frigorigène jusqu'à ce que le flux thermique froid ait produit un refroidissement à la surface du sol, de la dalle ou de la paroi,
effectuer au moins périodiquement un contrôle de la température superficielle du sol, dalle ou mur.
d'où il résulte que, en cas de présence d'une fuite, un abaissement de la température superficielle sera l'indice d'une fuite sous-jacente, en raison du refroidissement ponctuel brutal créé par la détente du fluide au niveau de la fuite;

A titre de mode préféré de mise en oeuvre le procédé sus défini consiste plus particulièrement à obturer la dite partie enfouie à toutes ses extrémités, sauf une, après l'avoir vidangée de son fluide, puis à injecter dans la conduite depuis l'extrémité restée libre de la partie enfouie, un fluide frigorigène, tel qu'un Fréon, tel de l'ammoniaque, etc..;, sous pression, puis à procéder après un certain temps (celui nécessaire pour que la migration thermique due au refroidissement atteigne la surface ) de maintien de la pression de Fréon, à un examen thermographique, par exemple à l'aide d'une caméra infrarouge, du sol, du mur ou de la paroi dans laquelle est enfouie la dite partie de conduite : une tache d'intensité lumineuse différente désignera sur l'écran de la caméra infrarouge, une fuite sous-jacente, en raison du refroidissement ponctuel brutal créé par la détente du fluide au niveau de la fuite; il suffit d'entretenir ce refroidissement en maintenant la pression du liquide frigorigène jusqu'à ce que le flux thermique froid ait produit un refroidissement à la surface du sol, de la dalle ou de la paroi, décelable à la caméra infrarouge.

On notera que si la caméra infrarouge est le moyen privilégié de réaliser le contrôle de la température de surface, il n'est pas exclusif d'autres appareils de meure de la température de surface (thermomètres, poudres ou films de cristaux thermofusibles, etc...

La présente invention sera mieux comprise, et des détails en relevant apparaîtront, à la description qui va être faite d'un exemple d'application, en relation avec les figures de la planche unique annexée dans laquelle :
- la fig.1 illustre schématiquement la recherche d'une fuite sur une conduite de chauffage central, et
- la fig.2 illustre de façon analogue le thermogramme obtenu situant la fuite;

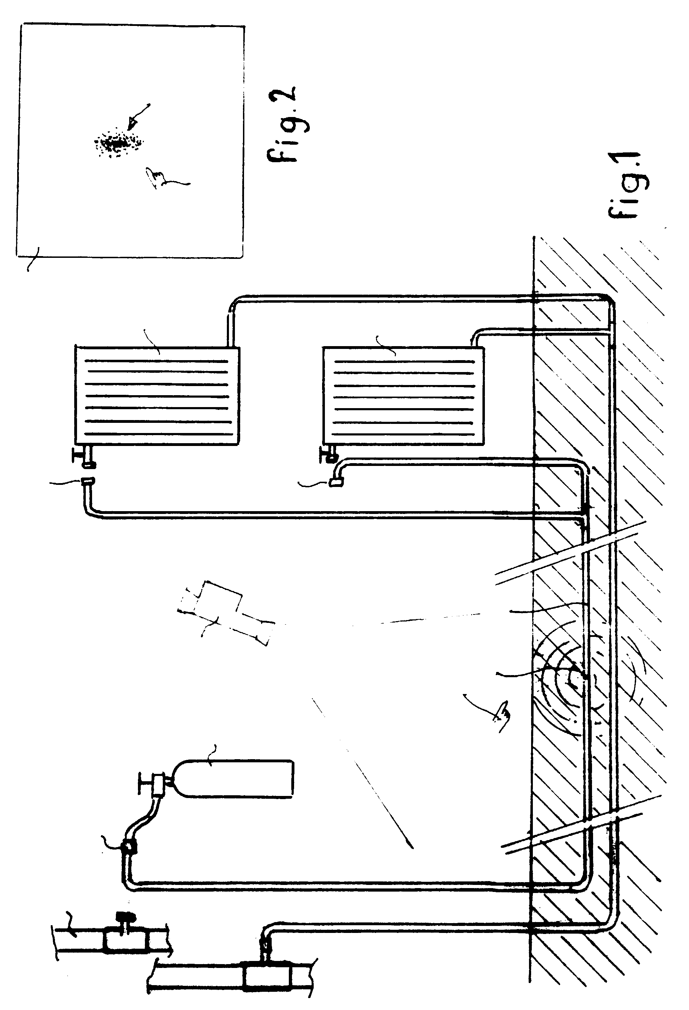

Sur la fig.1, un conduite enfouie 1 présente une fuite 2 résultant par exemple de la corrosion; après avoir déconnecté la conduite de la colonne 3 et des radiateurs 4 en bouchonnant de façon étanche les points 5 de raccordement aux radiateurs, on connecte (6) l'extrémité de la conduite à une bouteille de fluide frigorigène 7, par exemple le Fréon R22 (température à pression atmosphérique par détente :-40°C) qui semble être le plus intéressant pour ce genre d'applications. On maintien alors la pression du fluide pendant le temps nécessaire à la migration du refroidissement généré par la décompression du fluide; ce temps est évidemment fonction de la nature du sol ou de la dalle, de la profondeur d'enfouissement de la conduite, etc..,; il pourra être de quelques heures.

Dans l'exemple de la figure le contrôle de la température est effectué à l'aide d'une caméra infrarouge 8

Sur la fig.2, le thermogramme 10 fait nettement apparaître une tache 11 plus sombre qui est l'indice de la fuite recherchée; grâce à des repères mobiles (pouvant être constitués par le doigt 12 d'un assistant) cette tache peut être facilement localisée sur le sol.

L'invention trouve une application particulièrement avantageuse dans la recherche des fuites sur les conduites d'eau chaude ou froide, de chauffage, de gaz, etc...

Bien que l'on ait décrit ou représenté des formes particulières de réalisation ou d'application de l'invention , il doit être compris que la portée de cette dernière n'est pas limitée à ces formes mais qu'elle s'étend à toute forme de mise en oeuvre telle que la règle en est définie plus haut de façon générale.

## Revendications

1. Procédé de localisation de fuites sur une partie d'une conduite enfouie dans le sol, dans une dalle ou dans un mur, caractérisé :
en ce qu'il consiste à :
obturer la dite partie enfouie à toutes ses extrémités, sauf une, après l'avoir vidangée de son fluide, puis
injecter dans la conduite depuis l'extrémité restée libre de la partie enfouie, un fluide frigorigène sous pression, puis à
procéder après un certain temps de maintien de la pression du fluide frigorigène, à un contrôle de la température superficielle du sol, du mur ou de la paroi dans laquelle est enfouie la dite partie de conduite, et à
entretenir ce refroidissement en maintenant la pression du liquide frigorigène jusqu'à ce que le flux thermique froid ait produit un refroidissement à la surface du sol, de la dalle ou de la paroi,
effectuer au moins périodiquement un contrôle de la température superficielle du sol, dalle ou mur,
d'où il résulte que, en cas de présence d'une fuite, un abaissement de la température superficielle sera l'indice d'une fuite sous-jacente, en raison du refroidissement ponctuel brutal créé par la détente du fluide au niveau de la fuite;

2. Procédé selon la revendication 1, caractérisé :
en ce que le dit contrôle est un examen thermographique réalisé au moyen d'une caméra infrarouge,
une tache d'intensité lumineuse différente désignant sur l'écran de la caméra infrarouge l'emplacement de la fuite;

3. Procédé selon la revendication 1, caractérisé :
en ce que le fluide frigorigène utilisé est un Fréon;

4. Procédé selon la revendication 1, caractérisé :
en ce que le fluide frigorigène utilisé est l'ammoniaque;

5. Procédé selon la revendication 1, caractérisé :
en ce que le temps de maintien de la pression du fluide frigorigène est celui nécessaire pour que la migration thermique due au refroidissement atteigne la surface;
